Europäisches Patentamt

European Patent Office

Office européen des brevets

(11) Numéro de publication: **0 363 269**
**A1**

## (12) DEMANDE DE BREVET EUROPEEN

(21) Numéro de dépôt: 89402711.9

(22) Date de dépôt: 03.10.89

(51) Int. Cl.5: **B62D 1/18**

(30) Priorité: 04.10.88 FR 8813378

(43) Date de publication de la demande:
**11.04.90 Bulletin 90/15**

(84) Etats contractants désignés:
**AT BE CH DE ES FR GB GR IT LI LU NL SE**

(71) Demandeur: **COMPAGNIE FINANCIERE MECANIQUE EMBOUTISSAGE TRAITEMENT ASSEMBLAGE - COFIMETA S.A.**
**40, Boulevard Henri Sellier**
**F-92150 Suresnes(FR)**

(72) Inventeur: **Delain, Didier**
**1156 Rue des Moines**
**F-59182 Loffre(FR)**

(74) Mandataire: **Ecrepont, Robert**
**Cabinet Ecrepont 12 Place Simon Vollant**
**F-59800 Lille(FR)**

(54) **Dispositif de commande du mécanisme d'orientation des roues d'un véhicule.**

(57) L'invention se rapporte à un dispositif de commande du mécanisme (2) d'orientation des roues d'un véhicule, lequel dispositif comprend au moins un arbre de commande (3) qui d'une part est guidé en rotation par un moyen (4) porté à cet effet par au moins un support (5) et d'autre part est scindé en deux tronçons (10, 11) associés par un moyen (12) d'accouplement en rotation et de guidage en translation selon une direction (D) dite de coulissement, le tronçon inférieur (10) c'est à dire celui présentant l'extrémité basse (6) de l'arbre portant une butée axiale (14) contre laquelle est interposé un moyen (9) de freinage contrôlé puis de blocage du coulissement du dit tronçon en cas de choc, lequel moyen se trouve quant à lui en appui sur un support (5) présumé fixe en cas de choc.

Il est caractérisé en ce que le moyen (9) précité comporte non seulement une zone (18) déformable de manière prédéterminée selon la direction (D) de coulissement des deux tronçons (10, 11) mais également au moins un moyen principal de liaison (19) au support fixe (5), lequel moyen (19) est de nature telle que lorsque le tronçon inférieur (10) vient par sa butée axiale (14) percuter énergiquement une butée frontale (16) du manchon (15) tout en préservant la dite liaison, il autorise un certain déplacement du dit manchon par rapport au support (5) dans la direction de coulissement (D) du tronçon inférieur tout en opposant une résistance freinant de manière prédéterminée ce déplacement par rapport au support jusqu'au terme du déplacement.

_Fig: 2 _

## DISPOSITIF DE COMMANDE DU MECANISME D'ORIENTATION DES ROUES D'UN VEHICULE

L'invention se rapporte à un dispositif de commande du mécanisme d'orientation des roues d'un véhicule tel une automobile.

Les dispositifs de ce type comprennent généralement un arbre guidé en rotation autour de son axe, porté par un support et qui, d'une part, à son extrémité dite haute située dans l'habitacle du véhicule notamment face au siège du conducteur, porte un volant et d'autre part à son extrémité opposée dite basse, commande au moins indirectement le mécanisme d'orientation des roues du véhicule.

L'invention concerne précisément un dispositif du type précité équipé, d'une part, d'un moyen empêchant qu'en cas de choc l'arbre puisse coulisser vers le conducteur et, d'autre part, d'un moyen de réglage de la position du volant sur un axe parallèle à celui longitudinal à l'arbre qui le porte.

En effet, un des résultats que l'invention vise à obtenir est un dispositif qui réunisse les deux moyens précités alors qu'habituellement ces moyens sont totalement distincts et doivent faire l'objet d'opérations de montage également distinctes sur le véhicule à équiper.

A cet effet, l'invention a pour objet un dispositif du type précité notamment caractérisé en ce que le moyen empêchant le coulissement de l'arbre vers le conducteur comporte un manchon tubulaire qui loge le tronçon inférieur de l'arbre et :
- d'une part, présente au moins une butée dite frontale en vis à vis de la butée axiale du dit tronçon inférieur et coopère notamment avec ce dernier par un organe de guidage en rotation et,
- d'autre part, comporte non seulement une zone déformable de manière prédéterminée selon la direction de coulissement des deux tronçons mais également au moins un moyen principal de liaison au support fixe, lequel moyen est de nature telle que lorsque le tronçon inférieur vient par sa butée axiale percuter énergiquement la butée frontale du manchon tout en préservant la dite liaison, il autorise un certain déplacement du dit manchon par rapport au support dans la direction de coulissement du tronçon inférieur tout en opposant une résistance freinant de manière prédéterminée ce déplacement par rapport au support jusqu'au terme du déplacement.

L'invention sera bien comprise à l'aide de la description ci-après faite à titre d'exemple non limitatif en regard du dessin ci-annexé qui représente schématiquement :

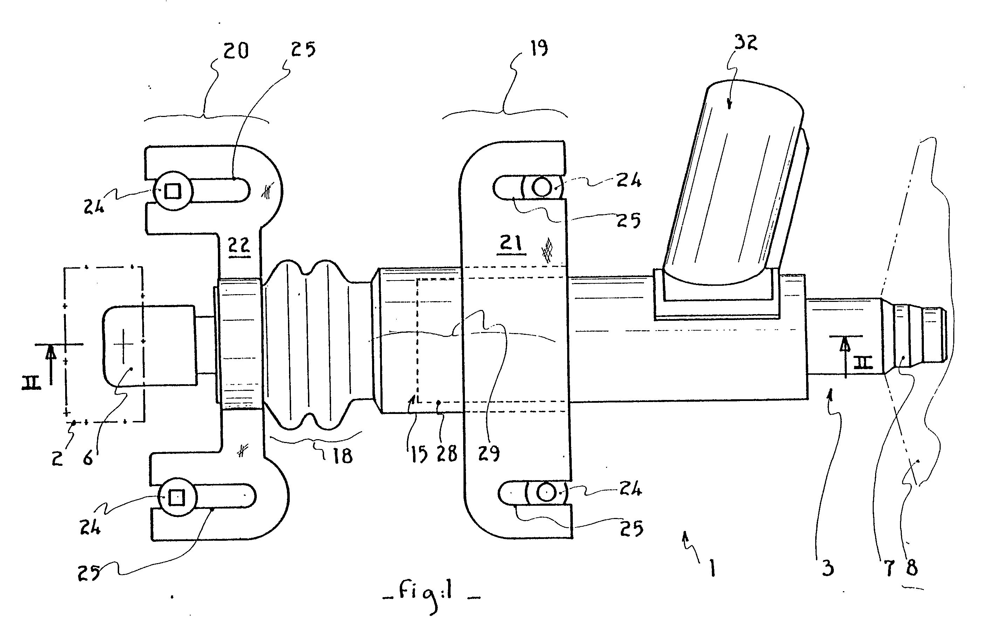

- figure 1 : une vue en coupe longitudinale du dispositif de l'invention,

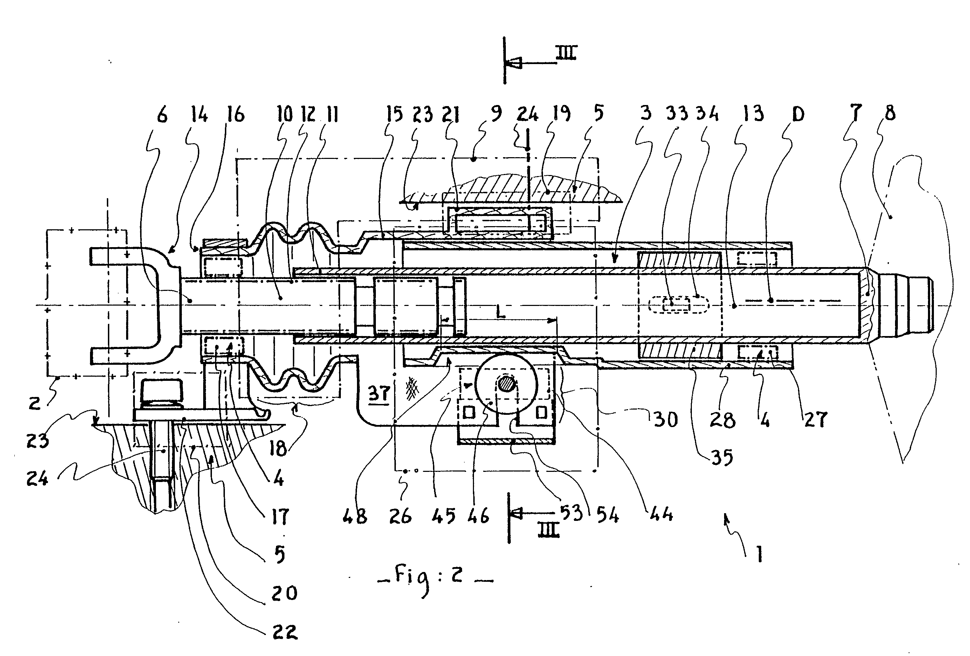

- figure 2 : une vue selon II-II de la figure 1,

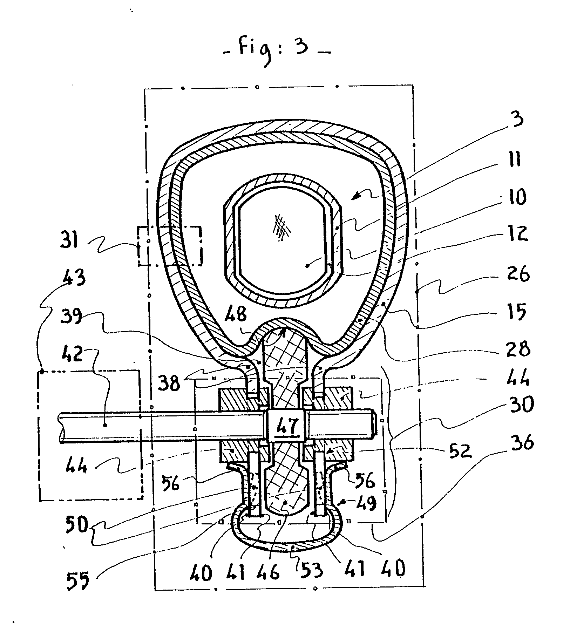

- figure 3 : une vue selon III-III de la figure 2.

En se reportant au dessin, on voit un dispositif 1 de commande du mécanisme 2 d'orientation des roues (non représentées) d'un véhicule également non représenté.

Classiquement, le dispositif comprend au moins un arbre de commande 3 guidé en rotation par un moyen 4 porté à cet effet par au moins un support 5 telle une poutre reliée au chassis du véhicule.

Tel que cela apparaît sur le dessin, l'arbre de commande 3 est, d'une part, relié au moins indirectement par celle 6 dite basse de ses extrémités 6, 7 au mécanisme 2 d'orientation des roues et, d'autre part, porte à son extrémité opposée 7 dite haute un organe de manoeuvre 8 tel un volant.

De manière connue, le dispositif comprend un moyen 9 empêchant le déplacement de l'extrémité haute de l'arbre de commande, donc du volant, vers le conducteur notamment en cas de choc frontal du véhicule.

A cet effet, d'une part, l'arbre de commande 3 est scindé en deux tronçons 10, 11 associés par un moyen 12 d'accouplement en rotation et de guidage en translation l'un par rapport à l'autre selon une direction D dite de coulissement sensiblement confondue avec l'axe longitudinal 13 et d'autre part le tronçon inférieur 10 de l'arbre c'est à dire celui portant l'extrémité dite basse 6 comporte une butée axiale 14 contre laquelle est interposé un moyen de freinage contrôlé du coulissement du dit tronçon, lequel moyen se trouve quant à lui en appui sur un support 5 présumé fixe en cas de choc frontal et par exemple sur une poutre transversale de l'habitacle.

Selon l'invention, le moyen 9 empêchant le coulissement de l'arbre 3 vers le conducteur comporte un manchon tubulaire 15 qui loge le tronçon inférieur 10 de l'arbre et,
- d'une part, présente au moins une butée dite frontale 16 en vis à vis de la butée axiale 14 du dit tronçon inférieur et coopère notamment avec ce dernier par un organe 17 de guidage en rotation et,
- d'autre part, comporte non seulement une zone 18 déformable de manière prédéterminée selon la direction D de coulissement des deux tronçons 10, 11 mais également au moins un moyen principal de liaison 19 au support fixe 5, lequel moyen 19 est de nature telle que lorsque le tronçon inférieur 10 vient par sa butée axiale 14 percuter énergiquement la butée frontale 16 du manchon 15 tout en préservant la dite liaison, il autorise un certain déplacement du dit manchon par rapport au support 5 dans la direction de coulissement D du tronçon inférieur tout en opposant une résistance freinant de manière prédéterminée ce déplacement par rapport au support jusqu'au terme du déplacement.

De préférence, le manchon tubulaire 15 comporte au niveau de sa zone déformable 18 au moins un second moyen de liaison 20 au support, lequel moyen est de nature telle que, tout en préservant sa liaison au dit support, par glissement contre le support, il autorise la déformation du manchon dans la direction de coulissement D des tronçons.

Avantageusement, ce second moyen de liaison est du même type que le moyen de liaison dit principal c'est à dire à même d'engendrer une action de freinage permettant l'absorption d'énergie cinétique lorsque le tronçon inférieur de l'arbre percute la butée frontale du manchon.

Conformément à l'invention, au moins l'un des moyens de liaison principal et/ou secondaire du manchon au support comprend:
- d'une part, au moins une platine 21, 22 d'appui sur une surface 23 du support qui comprend des génératrices sensiblement parallèles à la direction D de coulissement du tronçon inférieur et,
- d'autre part, au moins un organe 24 d'ancrage dans le support qui maintient fermement la platine contre la surface d'appui et ce avec une force ajustable afin au moins au montage de permettre par un réglage convenable de l'effort d'application de la platine sur le support de prédéterminer la valeur du freinage précité qui sera appliquée.

De préférence, d'une part, chaque platine 21, 22 s'étend transversalement au manchon tubulaire 15 et coopère avec deux organes d'ancrage 24 dans le support 5, lesquels sont disposés sensiblement symétriquement par rapport à un plan médian au manchon et d'autre part le corps de chacun des dits organes 24 traverse la platine par une découpe 25 oblongue dont l'axe longitudinal est orienté selon une direction sensiblement parallèle à celle D de coulissement des deux tronçons 10, 11 d'arbre de commande et dont la longueur détermine la valeur du déplacement souhaité pour la platine c'est à dire, en quelque sorte, la course maximale de freinage.

Tel que cela apparaît sur le dessin, le dispositif de commande de l'orientation des roues du véhicule comprend de manière connue un moyen 26 de réglage de la position du volant 8 sur un axe sensiblement confondu avec celui longitudinal 13 de l'arbre de commande.

Selon l'invention, pour constituer le moyen de réglage de la position du volant, le tronçon supérieur 11 de l'arbre est au niveau de son extrémité haute 7, c'est à dire de celle qui doit précisément porter le volant, guidé en rotation et fixé en translation par un organe 27 prévu à cet effet dans un carter 28 tubulaire qui coopère quant à lui de manière coulissante selon l'axe longitudinal de l'arbre de commande avec une zone 29 du manchon tubulaire 15, lequel manchon 15 est dans cette zone 29 équipé d'un moyen 30 commandé de blocage du coulissement du carter et d'un moyen 31 d'arrêt en rotation du dit carter, autour de l'axe longitudinal de l'arbre de commande.

Avec l'organe de guidage en rotation 17 porté par le manchon tubulaire 15, celui 27 précité porté par le carter 28 constitue le moyen 4 de guidage en rotation de l'arbre de commande 3.

On notera tel que cela a été représenté que le carter tubulaire 28 porte un moyen 32 connu, dit antivol, produisant l'immobilisation en rotation de l'arbre de commande 3 par rapport au support 5 lorsqu'un pêne 33 qu'il comprend vient sous l'effet d'un mécanisme de commande (non représenté) s'engager dans un logement 34 réservé à cet effet dans la paroi cylindrique 35 du tronçon supérieur 11.

Dans une forme préférée de réalisation, pour constituer le moyen commandé 30 de blocage du coulissement du carter d'une part le dit carter s'emboîte de manière coulissante dans le manchon tubulaire 13 et d'autre part, le manchon tubulaire est dans la zone 29 dite de coulissement, longitudinalement ouvert et porteur d'un moyen 36 de serrage radial de sa paroi sur le carter .

Par cela, on obtient le résultat essentiel de l'invention à savoir un dispositif de commande qui réunit dans un même ensemble de manière mécaniquement compatible et en préservant un fonctionnement distinct pour chacun d'eux d'une part un moyen de réglage de la position du volant sensiblement selon l'axe de l'arbre de commande qui le porte et d'autre part un moyen d'amortissement et de blocage du coulissement de l'arbre de commande vers le conducteur en cas de choc notamment frontal du véhicule.

Avantageusement, pour constituer le moyen 31 d'arrêt en rotation du carter 28 dans le manchon tubulaire 13, ces éléments sont dans les zones concernées par le coulissement une section tubulaire non circulaire.

De préférence, les sections précitées sont globalement triangulaires avec des côtés en arc de cercle.

De préférence, le moyen de serrage de la zone dite de coulissement du manchon sur le carter comprend d'une part des pattes 37 qui sont chacune solidaires d'un des bords 38 qui délimitent l'ouverture longitudinale 39 de la zone dite de coulissement 29 du manchon et s'étendent sensiblement parallèlement dans une direction radiale au carter et d'autre part ces pattes 37 sont traversées sensiblement normalement à leurs faces 40, 41 par un organe fileté 42 pourvu d'une poignée 43 de manoeuvre en rotation qui coopère avec des pièces taraudées 44 de pas contraire prenant chacune appui sur les pattes de manière à. selon le sens d'entraînement en rotation de l'organe fileté, induire le rapprochement de ces pattes et donc le serrage du manchon sur le carter ou au contraire l'éloignement des dites pattes et ainsi le desserrage du manchon.

Conformément à l'invention, le dispositif comporte un moyen 45 de freinage contrôlé du coulissement du carter 28 dans le manchon tubulaire 13 lors du réglage de la position du volant 8 selon l'axe longitudinal de l'arbre.

Dans une forme préférée de réalisation, le moyen 45 de freinage contrôlé du coulissement du carter 28 dans le manchon tubulaire 13 comprend d'une part un galet presseur 46 en matériau élastiquement déformable et qui coopère par roulement au moins localement avec la surface du carter selon la direction du coulissement, et d'autre part, guidant le galet en rotation une portée cylindrique 47 liée à une pièce 42 guidée en translation par rapport au manchon 13 selon une direction sensiblement normale à la surface de contact du galet sur le carter et sollicitée contre cette surface notamment élastiquement par un organe 53 à cet effet.

Avantageusement, d'une part, la portée cylindrique 47 est solidaire de l'organe filetée qui traverse les pattes 37 du manchon et est située sur cet organe de manière à guider le galet en rotation entre les pattes 37 précitées pour qu'il s'applique localement sur la surface du carter découverte à travers l'ouverture prévue à ce niveau c'est à dire dans la zone 29 dite de coulissement et d'autre part l'organe fileté traverse les pattes 37 par des découpes oblongues 54 d'axe longitudinal sensiblement normal à la surface de contact du galet avec le carter tandis que chacune des pièces taraudée avec lesquelles il coopère est élastiquement sollicitée par un organe 53 à cet effet dans la direction d'application du galet sur le carter.

Dans un mode préférentiel, le carter 28 comporte une rainure longitudinale 48 dans laquelle le galet roule lors du coulissement de ce carter dans le manchon et cette rainure a une longueur L qui est prédéterminée de manière à limiter la course du carter dans le manchon et par cela la course de réglage du volant à une valeur donnée.

Tel que cela apparaît sur le dessin, c'est à dire de manière non limitative pour l'invention, l'organe 53 qui permet de solliciter élastiquement le galet contre sa surface de roulement consiste en une pièce qui présente des branches 49 :
- en serrant les deux pattes 37 du manchon de manière à tendre à les rapprocher,
- portant chacune des ergots d'ancrage 50 dans des découpes 55 prévues à cet effet et,
- présentant chacune des lames élastiques 56 d'appui sur l'une des pièces filetées de manière à les solliciter dans la direction d'application du galet.

Comme cela apparaît sur le dessin, les pièces taraudées 44 qui coopèrent avec l'organe fileté 42 sont chacune montée coulissante par des glissières 52 dans la patte 37 avec laquelle elle coopère et ce selon la direction d'application du galet et de manière telle que l'actionnement de l'organe fileté permette de garantir tant le rapprochement que l'écartement des pattes précitées indépendamment de l'action de pincement qu'exerce la pièce 44 qui enserre les deux pattes.

De préférence, le galet a une épaisseur telle qu'un jeu subsiste entre ces flancs et les faces des éléments en vis à vis en position serrée du manchon sur le carter.

Avantageusement, lors du montage des diverses pièces du dispositif, on établit les jeux de fonctionnement du galet au moyen de cales qui seront extraites notamment après montage du dispositif sur le véhicule ou éventuellement en vue d'une série d'essais préalables.

**Revendications**

1. Dispositif de commande du mécanisme (2) d'orientation des roues d'un véhicule, lequel dispositif comprend au moins un arbre de commande (3) guidé en rotation par un moyen (4) porté à cet effet par au moins un support (5) tel une poutre reliée au chassis du véhicule, cet arbre de commande étant :
- d'une part relié au moins indirectement, par celle (6) dite basse de ses extrémités (6, 7), au mécanisme d'orientation précité tandis que son extrémité opposée dite haute (7) porte un organe (8) tel un volant de manoeuvre par le conducteur du véhicule, et
- d'autre part, scindé en deux tronçons (10, 11) associés par un moyen (12) d'accouplement en rotation et de guidage en translation selon une direction (D) dite de coulissement, le tronçon inférieur (10) c'est à dire celui présentant l'extrémité basse (6) de l'arbre portant une butée axiale (14) contre laquelle est interposé un moyen (9) de freinage contrôlé puis de blocage du coulissement du dit tronçon en cas de choc, lequel moyen se trouve quant à lui en appui sur un support (5) présumé fixe en cas de choc,
ce dispositif comportant en outre au moins un moyen de réglage (26) de la position du volant (8) porté par le tronçon supérieur (11) selon un axe sensiblement confondu avec celui longitudinal de l'arbre de commande (3),
ce dispositif étant **CARACTERISE** en ce que le moyen (9) empêchant le coulissement de l'arbre (3) vers le conducteur comporte un manchon tubulaire (15) qui loge le tronçon inférieur (10) de l'arbre et :

- d'une part, présente au moins une butée dite frontale (16) en vis à vis de la butée axiale (14) du dit tronçon inférieur et coopère notamment avec ce dernier par un organe (17) de guidage en rotation et,

- d'autre part, comporte non seulement une zone (18) déformable de manière prédéterminée selon la direction (D) de coulissement des deux tronçons (10, 11) mais également au moins un moyen principal de liaison (19) au support fixe (5), lequel moyen (19) est de nature telle que lorsque le tronçon inférieur (10) vient par sa butée axiale (14) percuter énergiquement la butée frontale (16) du manchon (15) tout en préservant la dite liaison, il autorise un certain déplacement du dit manchon par rapport au support (5) dans la direction de coulissement (D) du tronçon inférieur tout en opposant une résistance freinant de manière prédéterminée ce déplacement par rapport au support jusqu'au terme du déplacement.

2. Dispositif selon la revendication 1 caractérisé en ce que, pour constituer le moyen de réglage de la position du volant, le tronçon supérieur (11) de l'arbre est au niveau de son extrémité haute (7) c'est à dire de celle qui doit précisément porter le volant guidé en rotation et fixé en translation par un organe (27) prévu à cet effet dans un carter (28) tubulaire qui coopère quant à lui de manière coulissante selon l'axe longitudinal de l'arbre de commande avec une zone (29) du manchon tubulaire (15), lequel manchon 15) est dans cette zone (29) équipé d'un moyen commandé (30) de blocage du coulissement du carter et d'un moyen (31) d'arrêt en rotation du dit carter, autour de l'axe longitudinal de l'arbre de commande.

3. Dispositif selon la revendication 2 caractérisé en ce que le manchon tubulaire (15) comporte au niveau de sa zone déformable (18) au moins un second moyen de liaison (20) au support, lequel moyen est de nature telle que, tout en préservant sa liaison au dit support, par glissement contre le support, il autorise la déformation du manchon dans la direction de coulissement (D) des tronçons.

4 Dispositif selon l'une quelconque des revendications 1 à 3 caractérisé en ce qu'au moins l'un des moyens de liaison principal et/ou secondaire du manchon au support comprend:

- d'une part, au moins une platine (21, 22) d'appui sur une surface (23) du support qui comprend des génératrices sensiblement parallèles à la direction (D) de coulissement du tronçon inférieur et,

- d'autre part, au moins un organe (24) d'ancrage dans le support qui maintient fermement la platine contre la surface d'appui et ce avec une force ajustable afin au moins au montage de permettre par un réglage convenable de l'effort d'application de la platine sur le support de prédéterminer la valeur du freinage précité qui sera appliquée.

5. Dispositif selon l'une quelconque des revendications 1 à 4 caractérisé en ce que d'une part, chaque platine (21, 22) s'étend transversalement au manchon tubulaire (15) et coopère avec deux organes d'ancrage (24) dans le support (5), lesquels sont disposés sensiblement symétriquement par rapport à un plan médian au manchon et d'autre part le corps de chacun des dits organes (24) traverse la platine par une découpe (25) oblongue dont l'axe longitudinal est orienté selon une direction sensiblement parallèle à celle (D) de coulissement des deux tronçons (10, 11) d'arbre de commande et dont la longueur détermine la valeur du déplacement souhaité pour la platine c'est à dire, en quelque sorte, la course maximale de freinage.

6. Dispositif selon l'une quelconque des revendications 1 à 5 caractérisé en ce que, pour constituer le moyen de commande (30) du blocage du coulissement du carter d'une part le dit carter s'emboîte de manière coulissante dans le manchon tubulaire (13) et d'autre part, le manchon tubulaire est, dans la zone (29) dite de coulissement, longitudinalement ouvert et porteur d'un moyen (36) de serrage radial de sa paroi sur le carter.

7. Dispositif selon l'une quelconque des revendications 1 à 6 caractérisé en ce que le dispositif comporte un moyen (45) de freinage contrôlé du coulissement du carter (28) dans le manchon tubulaire (13) lors du réglage de la position du volant (8) selon l'axe longitudinal de l'arbre.

8. Dispositif selon la revendication 7 caractérisé en ce que le moyen (45) de freinage contrôlé du coulissement du carter (28) dans le manchon tubulaire (13) comprend d'une part un galet presseur (46) en matériau élastiquement déformable et qui coopère par roulement au moins localement avec la surface du carter selon la direction du coulissement, et d'autre part, guidant le galet en rotation une portée cylindrique (47) liée à une pièce (42) guidée en translation par rapport au manchon (13) selon une direction sensiblement normale à la surface de contact du galet sur le carter et sollicitée contre cette surface notamment élastiquement par un organe (53) à cet effet.

9. Dispositif selon l'une quelconque des revendications 1 à 7 caractérisé en ce que d'une part, la portée cylindrique (47) est solidaire de l'organe fileté qui traverse les pattes (37) du manchon et est située sur cet organe de manière à guider le galet en rotation entre les pattes (37) précitées pour qu'il s'applique localement sur la surface du carter découverte à travers l'ouverture prévue à ce niveau c'est à dire dans la zone (29) dite de coulissement et d'autre part l'organe fileté traverse les pattes (37) par des découpes oblongues (54) d'axe longitudinal sensiblement normal à la surface de contact du galet avec le carter tandis que chacune des pièces taraudée avec lesquelles il coopère est élastiquement sollicitée par un organe (53) à cet effet dans la direction d'application du galet sur le carter.

10. Dispositif selon la revendication 9 caractérisé en ce que le carter (28) comporte une rainure longitudinale (48) dans laquelle le galet roule lors du coulissement de ce carter dans le manchon et cette rainure a une longueur (L) qui est prédéterminée de manière à limiter la course du carter dans le manchon et par cela la course de réglage du volant à une valeur donnée.

_ fig:1 _

EP 0 363 269 A1

Fig. 2

- Fig: 3 -

EP 0 363 269 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 412 696 (DAIMLER-BENZ) <br> * Revendications; page 3; figures * <br> --- | 1 | B 62 D 1/18 |
| A | US-A-3 457 800 (TOSHIDA) <br> * En entier * <br> --- | 11 | |
| A | DE-B-1 303 280 (DAIMLER-BENZ) <br> * En entier * <br> --- | 1 | |
| A | US-A-1 795 567 (MAURICE) <br> * En entier * <br> ----- | 1,7-10 | |

**DOMAINES TECHNIQUES RECHERCHES (Int. Cl.5)**

B 62 D

Le présent rapport a été établi pour toutes les revendications

| Lieu de la recherche | Date d'achèvement de la recherche | Examinateur |
|---|---|---|
| LA HAYE | 10-01-1990 | PIRIOU J.C. |